Europäisches Patentamt

European Patent Office

Office européen des brevets

(19)

(11) Veröffentlichungsnummer: **0 352 576 B1**

# EUROPÄISCHE PATENTSCHRIFT

(12)

(45) Veröffentlichungstag der Patentschrift: **02.12.92**

(21) Anmeldenummer: **89113019.7**

(22) Anmeldetag: **15.07.89**

(51) Int. Cl.⁵: **B23K 9/28**, B23K 9/12

⑤ Schweissbrenner.

(30) Priorität: **26.07.88 DE 3825345**

(43) Veröffentlichungstag der Anmeldung:
**31.01.90 Patentblatt 90/05**

(45) Bekanntmachung des Hinweises auf die
Patenterteilung:
**02.12.92 Patentblatt 92/49**

(84) Benannte Vertragsstaaten:
**AT BE CH DE ES FR GB IT LI LU NL SE**

(56) Entgegenhaltungen:
**EP-A- 0 219 691**
**EP-A- 0 224 822**
**EP-A- 0 249 774**
**DE-A- 3 409 044**
**US-A- 4 540 869**

(73) Patentinhaber: **KUKA Schweissanlagen & Roboter GmbH**
**Blücherstrasse 144**
**W-8900 Augsburg(DE)**

(72) Erfinder: **Zimmer, Ernst**
**Michael-Steinherr Strasse 34**
**W-8904 Friedberg(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz**
**2b**
**W-8900 Augsburg(DE)**

EP 0 352 576 B1

**Beschreibung**

Die Erfindung betrifft einen Schweißbrenner mit den Merkmalen im Oberbegriff des Hauptanspruches.

Ein derartiger Schweißbrenner ist aus der DE-A1-35 45 505 bekannt. Hier ist die Abschaltsicherung in Drahtförderrichtung hinter dem Drahtantrieb angeordnet. Das Brennerrohr ist mit dem ausweichfähigen Teil der Abschaltsicherung verbunden, während deren Gehäuse und der Drahtantrieb eine bauliche Einheit bilden und gemeinsam an der Hand eines Roboters befestigt sind. Die Abschaltsicherung erfüllt zwei Funktionen. Sie dient einerseits als Notschalter zum Stillsetzen des Schweißbrenners bei Kollisionen mit dem Werkstück. Andererseits wird sie als Berührungsschalter zum Auffinden der Schweißbahnbezugspunkte genutzt. In beiden Fällen hat sich die Anordnung der Abschaltsicherung hinter dem Drahtantrieb als nachteilig für die Drahtführung herausgestellt. Bei einer Schwenkbewegung des Brennerrohres mit der Abschaltsicherung muß der in diesem Abschnitt nur noch geschobene Draht umgelenkt werden. Dies kann sich nachteilig auf die Gleichmäßigkeit des Drahtvorschubes auswirken.

Eine ähnliche Anordnung ist aus der US-A-4 540 869 bekannt, die mit den gleichen Problemen behaftet ist.

Es ist daher Aufgabe der vorliegenden Erfindung, einen Schweißbrenner mit einem Drahtantrieb und einer Abschaltsicherung aufzuzeigen, der eine höhere Betriebssicherheit in Verbindung mit einer günstigeren Drahtführung und einer besseren Handhabung aufweist.

Die Erfindung löst diese Aufgabe mit den Merkmalen im Kennzeichenteil des Hauptanspruches. Die Abschaltsicherung sitzt erfindungsgemäß nun in Drahtförderrichtung vor dem Drahtantrieb, so daß eine Drahtumlenkung nur noch vor dem Drahtantrieb, also im Zugbereich, stattfinden kann. Hinter dem Drahtantrieb wird der Schweißdraht ohne Umlenkungen in gerader Strecke vorgeschoben. Es kann damit zu keinen Störungen im Drahtvorschub mehr kommen.

Außerdem ergeben sich bauliche Vorteile und eine bessere Handhabung des Schweißbrenners, da durch die Verlagerung der Abschaltsicherung nach oben der Tool-Center-Point bzw. das Ende des Brennerrohres näher an die Handachse eines Manipulators oder Industrieroboters heranrücken. Dies bringt größere Freiheiten in der Brennerwahl und der Beweglichkeit der Roboterhand mit dem Schweißbrenner, die nun auch schwer zugängliche Stellen am Werkstück besser erreichen können. Außerdem vereinfacht sich die Steuerung und es gibt im Bereich des Brennerrohres mehr Platz für den Anbau von Zusatzkomponenten, wie beispielsweise einem Schweißsensor oder dergleichen. Der Schweißsensor kann zudem eine eigene Beweglichkeit haben. Insgesamt kann die Baulänge des Schweißbrenners erheblich verkürzt werden.

Mit der obenliegenden Abschaltsicherung vergrößert sich der Abstand des Brennerrohrendes vom Schwenkpunkt in der Abschaltsicherung. Hieraus ergibt sich für Kollisionen des Brennerrohres mit Hindernissen ein wesentlich größerer Nachlauf und eine größere Bremsstrecke bei gleichbleibenden Schwenkwinkeln. Der Schweißbrenner kann damit ohne Beschädigungsgefahr mit höheren Geschwindigkeiten als bisher verfahren werden.

Die Abschaltsicherung selbst kann unterschiedlich ausgebildet sein, wobei sich eine Bauweise entsprechend der DE-A1-35 45 505.5 empfiehlt. In jedem Fall ist der bewegliche Teil der Abschaltsicherung mit dem Drahtantrieb und dem Brennerrohr sowie eventuellen Zusatzkomponenten verbunden, während die Abschaltsicherung bzw. deren Gehäuse an der Hand eines Manipulators montiert ist.

Die von außen zugeführten Leitungen für die Betriebsmittel, wie Schutzgas, Kühlmedium, Strom, aber auch die Führung für den Schweißdraht sind erfindungsgemäß am beweglichen Teil der Abschaltsicherung oder an den daran angeordneten Teilen des Schweißbrenners angeschlossen. Innerhalb der anschließenden Bereiche des Drahtantriebs, des Brennerrohrs oder eventueller Zusatzaggregat sind die betreffenden Leitungen starr weiterverlegt. Diese Anordnung bietet eine wesentlich höhere Leitungselastizität bei Ausweichbewegungen des Brenners. Das Leitungsbündel muß nicht erst an einem relativ ortsfesten Punkt, wie dem Abschaltsicherungsgehäuse oder der Roboterhand angeschlossen und von dort mit kurzen knickgefährdeten Leitungen zu den einzelnen Brennerteilen geführt werden. Vielmehr steht den Leitungen für entsprechende Verformungen im Schlauch eine große freie Länge und zusätzlich die Schlauchelastizität zur Verfügung, so daß sie bei Ausweichbewegungen geringer als bisher belastet werden und eine größere Haltbarkeit und Betriebssicherheit haben.

Der erfindungsgemäße Schweißbrenner eignet sich besonders für die Kombination mit Industrierobotern, für die er weitere spezifische Vorteile hat. Der Aufbau des Schweißbrenners erlaubt nämlich eine Verringerung der Gesamtbaugröße und des Brennergewichtes. Der erfindungsgemäße Schweißbrenner läßt sich damit auch an kleineren Robotern einsetzen. Daneben kann der erfindungsgemäße Schweißbrenner auch an einfacheren Manipulatoren, Werkzeugführungen oder dergleichen anderen Geräten Verwendung finden.

In den Unteransprüchen sind weitere vorteilhafte Ausgestaltungen der Erfindung angegeben. Bei Verwendung einer Abschaltsicherung mit einer schwenkbaren Schaltscheibe empfiehlt es sich, an dieser über einen Kragen den Drahtantrieb und das Brennerrohr, bzw. deren Gehäuse zu befestigen. Die Ausbildung des Abschaltsicherungsgehäuses mit zwei voneinander distanzierten Stegen ermöglicht einen platzsparenden Aufbau und eine günstige Gewichtsverteilung.

Die Erfindung ist in den Zeichnungen beispielsweise und schematisch dargestellt. Im einzelnen zeigen:

Fig. 1: einen Roboter mit einem Schweißbrenner in Seitenansicht,

Fig. 2: einen Schweißbrenner in vergrößerter Darstellung in Seitenansicht,

Fig. 3: den Schweißbrenner von Fig. 2 in Draufsicht und

Fig. 4: den Schweißbrenner in Variation von Fig. 2 in Stirnansicht gemäß Pfeil IV.

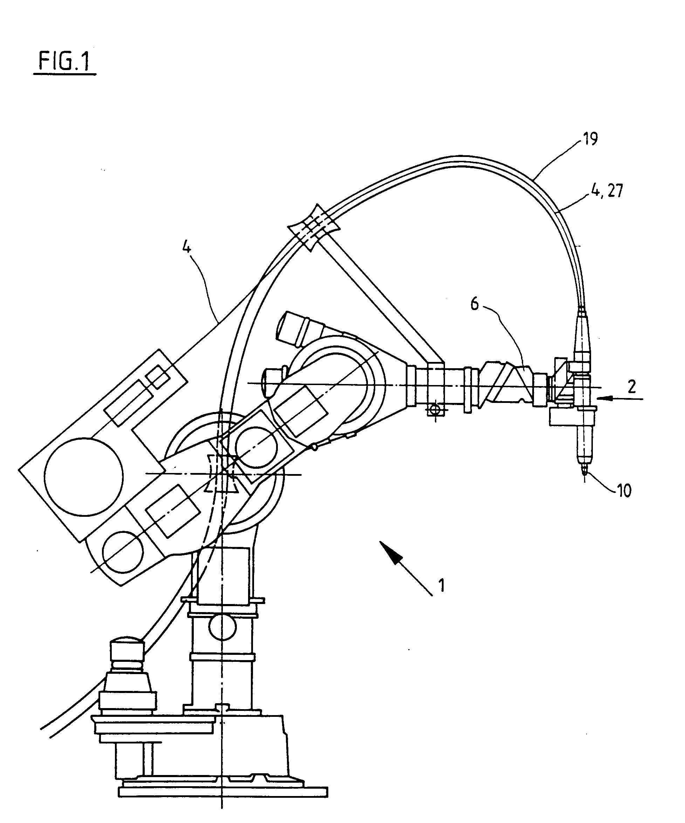

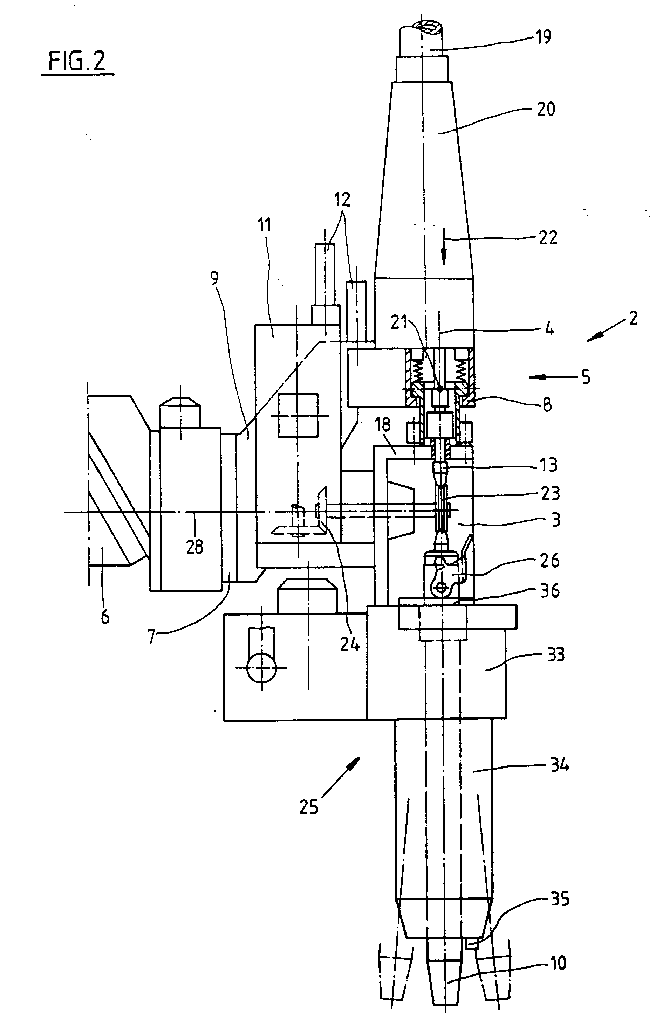

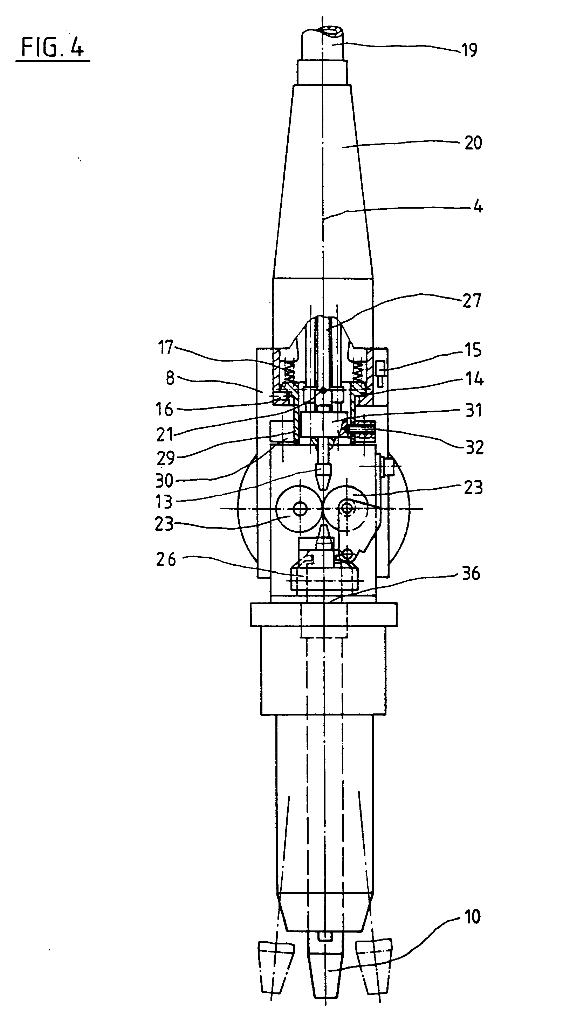

Fig. 1 zeigt einen sechsachsigen Industrieroboter (1), an dessen Hand (6) ein Schweißbrenner (2) angeordnet ist. Dem Brenner wird von einer Rolle Schweißdraht (4) in einem Schlauch (19) zugeführt, der am Ende des Brennerrohres (10) zum Werkstück austritt. Die gezeigte Anordnung ist für Schutzgasschweißen, beispielsweise mit Kohlendioxid, ausgebildet. Das Schutzgas und weitere Betriebsmittel werden dem Brenner ebenfalls über den Schlauch (19) in einem Leitungsbündel (27) zugeführt (vgl. Fig. 2 und 4).

Der Schweißroboter (1) wird zum automatischen Schweißen eingesetzt, wobei er auch die Nahtbahn automatisch sucht und verfolgt. Gegebenenfalls kann ein Schweißsensor (25) korrigierend eingreifen (vgl. Fig. 2). Der Schweißbrenner (2) weist einen Drahtantrieb (3) und eine Abschaltsicherung (5) auf, wobei letztere als Notabschaltung bei Kollisionen mit dem Werkstück und als Signalgeber zum Aufsuchen der Nahtbahn dient. Zum Verfolgen der Nahtbahn beim Schweißen ist eine schweißstromabhängige Brennerhöhenregelung, gegebenenfalls in Verbindung mit einer Pendelbewegung des Brenners vorgesehen. Der Drahtantrieb (3) ist im gezeigten Ausführungsbeispiel als Doppelrollenantrieb ausgebildet. Er kann aber auch beliebig anders, z.B. als Wirbelkopf oder Vierrollenantrieb gestaltet sein.

Fig. 2 bis 4 geben den Aufbau des Schweißbrenners (2) im Detail wieder.

Wie aus Fig. 2 und 4 ersichtlich, ist die Abschaltsicherung (5) in Drahtförderrichtung (22) vor dem Drahtantrieb (3), insbesondere vor dessen Antriebsrollen (23) angeordnet. Die Antriebsrollen (23) befinden sich bei gestreckter Roboterhand (6) etwa in Höhe der Handachse (28). Die Abschaltsicherung (5) ist über dieser Roboterachse (28) angeordnet.

Der komplette Drahtantrieb (3) mit seinem Motor (11), dem Getriebe (24), den Antriebsrollen (23) und den weiteren Teilen ist zusammen mit dem Brennerrohr (10) am beweglichen Teil der Abschaltsicherung (5), hier einer Schaltscheibe (14), gelagert. Das Gehäuse (8) der Abschaltsicherung (5) hingegen ist an der Flanschplatte (7) der Roboterhand (6) befestigt. Bei einer Kollision des Brennerrohres (10) mit der Nahtflanke oder einem sonstigen Teil des Werkstückes weichen der Drahtantrieb (3) und das Brennerrohr (10) mit der Schaltscheibe (14) gemeinsam aus. Der über ein Führungsrohr (13) zugeleitete Schweißdraht (4) wird durch die starre Verbindung des Brennerrohres (10) mit dem Drahtantrieb (3) damit von den Antriebsrollen (23) bis zum Austritt am Brennerrohrende stets in einer geraden Bahn geführt.

Die Abschaltsicherung (5) weist eine kreisrunde Schaltscheibe (14) auf, die mit mehreren Schaltkontakten (15), hier in Form von Mikroschaltern, direkt oder mittelbar im Eingriff steht. Die Schaltscheibe (14) wird über Federn (17) angedrückt und liegt seitlich geführt auf dem unteren Rand des Gehäuses (8) auf. Im Gehäuse (8) sind außerdem Drehsicherungen (16) angeordnet, mit deren Hilfe die Schaltscheibe (14) ausgerichtet und eingestellt werden kann.

Die Schaltscheibe (14) besitzt einen nach unten aus dem Gehäuse (8) vorspringenden Kragen (29), an dem das Gehäuse (18) des Drahtantriebes (3) über einen Spannring (30) lösbar befestigt ist. Die beiden Gehäuse (8,18) sind mit ausreichendem Bewegungsfreiraum übereinander angeordnet. Am Drahtantrieb (3) ist das Brennerrohr (10) mittels eines Schnellspannverschlusses (26) rasch austauschbar befestigt. Der Schnellspannverschluß (26) hintergreift mit einer Gabel das Brennerrohr (10) an entsprechenden Aussparungen und preßt es federnd in eine Aufnahme. Damit hängen der Drahtantrieb (3) und das Brennerrohr (10) an der Schaltscheibe (14).

Stößt das Brennerrohr (10) gegen ein Hindernis, weicht es samt dem Drahtantrieb (3) aus, wobei die Schaltscheibe (14) gegen die rückstellende Federkraft (17) um ihren Schwenkpunkt (21) kippt bzw. axial abhebt. Hierdurch werden ein oder mehrere der gleichmäßig über den Umfang verteilten Mikroschalter (15) geöffnet, die ein entsprechendes Signal an die Steuerung des Roboters (1) abgeben. Die Schaltscheibe (14) reagiert auf Auslenkungen des Brennerrohres (10) nach allen Richtungen. Nach Entlastung kehrt die Schaltscheibe (14) selbsttätig in ihre Ausgangsstellung zurück.

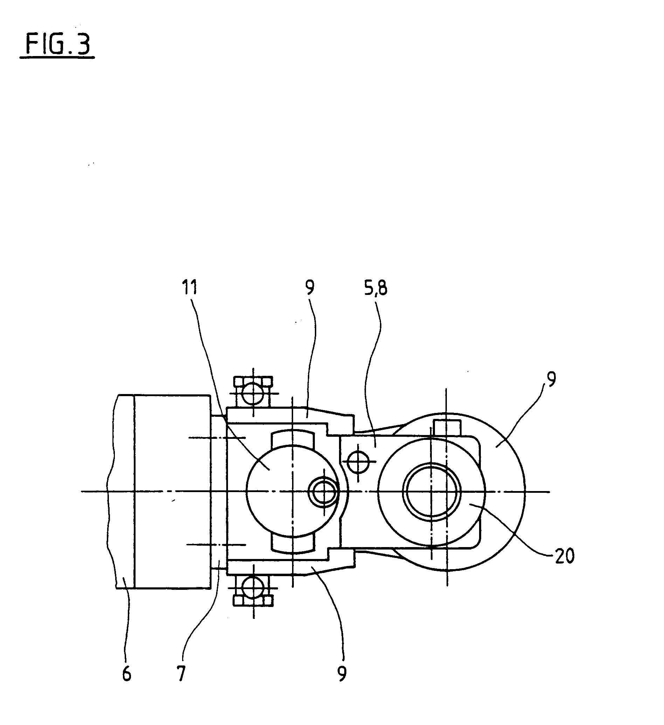

Wie Fig. 2 und 3 verdeutlichen, ist das Gehäuse (8) der Abschaltsicherung (5) über zwei seitlich voneinander distanzierte Stege (9) mit der Flanschplatte (7) verbunden. Die Stege (9) erstrecken sich von der Flanschplatte (7) ausgehend nach oben zum Gehäuse (8). Zwischen den Stegen (9) findet damit der aufrechtstehende Antriebsmotor (11) mit seitlichem Bewegungsspielraum aureichend Platz. Hierdurch wird die Baugröße des Schweißbrenners (2) verkleinert und das Motorgewicht näher an die Manipulatorhand (6) verlegt.

Auf dem gegenüber der Roboterhand relativ ortsfesten Gehäuse (8) der Abschaltsicherung (5) ist nur ein Anschluß (12) für die Signalleitung angeordnet. Die Strom- und Signalleitung für den Drahtantrieb (3) ist hingegen auf das relativ bewegliche Antriebsgehäuse geführt. Die verschiedenen Leitungen münden weiter oben in das Leitungsbündel (27). Auf dem Gehäuse (8) ist auch die trichterförmige Schlauchtülle (20) befestigt.

Das Leitungsbündel (27) selbst ist lediglich am oberen Ende der Schlauchtülle (20) geklemmt und ansonsten mit seitlichem Spiel und frei durch die Schlauchtülle (20) und die Schaltscheibe (14) geführt. Im Kragen (29) ist im Bereich der Verbindung zum Antriebsgehäuse (18) ein Leitungsanschluß (31) in Form einer Steckkupplung angeordnet. Die eine Kupplungshälfte ist mit dem Leitungsbündel (27) verbunden und faßt die verschiedenen Kabel und Leitungen für Schutzgas, Kühlwasser mit Vor- und Rücklauf usw. sowie die Schweißdrahtführung zusammen. Sie wird in der Kupplungsstellung über eine Spannschraube (32) und einen Konus im Kragen (29) fixiert. Die andere Kupplungshälfte ist am Antriebsgehäuse befestigt. Von hier aus sind die einzelnen Leitungen im Antriebsgehäuse (18) und im Brennerrohr (10) starr weiterverlegt. Der Schweißdraht (4) wird über ein Führungsrohr (13) zwischen die Antriebsrollen (23) geleitet und gelangt über ein zweites solches Rohr in das Brennerrohr (10).

Bei Ausweichbewegungen des Brennerrohres (10) wird die Steckkupplung (31) samt den starr verlegten Leitungen mitbewegt. Eine Kompensationsbewegung der Leitungen findet erst oberhalb der Steckkupplung (31) im Bereich bis zum oberen Ende der Schlauchtülle (20) und im anschließenden Schlauch (19) statt. Aufgrund der großen freien Verformungslänge können die Leitungen die Ausweichbewegung problemlos elastisch auffangen.

Die Unterseite des Antriebsgehäuses (18) bietet eine definierte Schnittstelle (36) in Form einer justierten Flanschfläche zum Anbau von Zusatzkomponenten. Im Ausführungsbeispiel der Fig. 2 ist hier ein Schweißsensor (25) mit seinem Gehäuse (33) befestigt. Er besitzt ein drehbar gelagertes und über einen Antrieb bewegbares Sensorrohr (34), das das Brennerrohr (10) umgibt. Im Sensorrohr (34) ist das endseitig vorstehende Sensorelement (35) untergebracht. Letzteres arbeitet beispielsweise mit einem vom Werkstück reflektierten Lichtbalken, dessen Form optisch erfaßt und ausgewertet wird. Über den Drehantrieb kann das Sensorelement (35) auch gebogenen Nahtverläufen folgen und entsprechend ausgerichtet werden.

**STÜCKLISTE**

| 1 | Manipulator, Roboter |
| 2 | Schweißbrenner |
| 3 | Drahtantrieb |
| 4 | Schweißdraht |
| 5 | Abschaltsicherung |
| 6 | Hand, Roboterhand |
| 7 | Flanschplatte |
| 8 | Gehäuse |
| 9 | Steg |
| 10 | Brennerrohr |
| 11 | Antriebsmotor |
| 12 | Anschluß |
| 13 | Führungsrohr |
| 14 | Schaltscheibe |
| 15 | Schaltkontakte, Mikroschalter |
| 16 | Drehsicherung |
| 17 | Feder |
| 18 | Antriebsgehäuse |
| 19 | Schlauch |
| 20 | Schlauchtülle |
| 21 | Schwenkpunkt |
| 22 | Drahtförderrichtung |
| 23 | Antriebsrollen |
| 24 | Getriebe |
| 25 | Schweißsensor |
| 26 | Schnellspannverschluß |
| 27 | Leitungsbündel |
| 28 | Roboter-Achse, Handachse |
| 29 | Kragen |
| 30 | Spannring |
| 31 | Leitungsanschluß, Steckkupplung |
| 32 | Spannschraube |
| 33 | Sensorgehäuse |
| 34 | Sensorrohr |
| 35 | Sensorelement |
| 36 | Schnittstelle |

**Patentansprüche**

1. Schweißbrenner mit einem Drahtantrieb (3) und einer Abschaltsicherung (5), dadurch **gekennzeichnet,** daß die Abschaltsicherung (5) in Drahtförderrichtung (22) vor dem Drahtantrieb (3) angeordnet ist.

2. Schweißbrenner nach Anspruch 1, dadurch **gekennzeichnet,** daß der Drahtantrieb (3) und das Brennerrohr (10) an der Abschaltsicherung (5) beweglich gelagert sind.

3. Schweißbrenner nach Anspruch 1 oder 2, dadurch **gekennzeichnet,** daß die Abschaltsicherung (5) mit der Hand (6) eines Manipulators (1) verbunden ist.

4. Schweißbrenner nach Anspruch 2 oder 3, dadurch **gekennzeichnet,** daß die Abschaltsicherung (5) eine schwenkbar im Gehäuse (8) gelagerte und mit Schaltkontakten (15) versehene Schaltscheibe (14) aufweist, an der der Drahtantrieb (3) und das Brennerrohr (10) befestigt sind, wobei das Gehäuse (8) an der Hand (6) montiert ist.

5. Schweißbrenner nach Anspruch 4, dadurch **gekennzeichnet,** daß die Schaltscheibe (14) einen durch das Gehäuse (8) vorstehenden Kragen (29) aufweist, an dem das Antriebsgahäuse (18) lösbar befestigt ist.

6. Schweißbrenner nach Anspruch 2, 4 oder 5, dadurch **gekennzeichnet,** daß das Gehäuse (8) zwei voneinander distanzierte Stege (9) zur Befestigung an der Hand (6) aufweist, die Teile (11) des Drahtantriebs (3) mit seitlichem Abstand umgreifen.

7. Schweißbrenner nach Anspruch 1 oder einem der folgenden, dadurch **gekennzeichnet,** daß die Leitungsanschlüsse (31) für die Betriebsmittel des Schweißbrenners (2) an einem beweglichen Teil der Abschaltsicherung (5) oder des Schweißbrenners (2) angeordnet sind.

8. Schweißbrenner nach Anspruch 1 oder einem der folgenden, dadurch **gekennzeichnet,** daß am Drahtantrieb (3) eine Schnittstelle (36) zum Anschluß von Zusatzaggregaten angeordnet ist.

9. Schweißbrenner nach Anspruch 8, dadurch **gekennzeichnet,** daß am Drahtantrieb (3) ein beweglicher Schweißsensor (25) angeordnet ist, dessen Gehäuse (33) mit dem Sensorantrieb an der Schnittstelle (36) befestigt ist und dessen drehbares Sensorrohr (34) das Brennerrohr (10) umgibt und am Ende ein Sensorelement (35) trägt.

## Claims

1. Welding torch having a wire drive (3) and a cutout safety mechanism (5), characterized in that the cutout safety mechanism (5), as seen in the conveying direction (22) of the wire, is arranged upstream of the wire drive (3).

2. Welding torch according to Claim 1, characterized in that the wire drive (3) and the torch tube (10) are movably mounted on the cutout safety mechanism (5).

3. Welding torch according to Claim 1 or 2, characterized in that the cutout safety mechanism (5) is connected to the hand (6) of a manipulator (1).

4. Welding torch according to Claim 2 or 3, characterized in that the cutout safety mechanism (5) has a switching plate (14) which is mounted pivotally in the housing (8), is provided with switching contacts (15) and has secured to it the wire drive (3) and the torch tube (10), the housing (8) being mounted on the hand (6).

5. Welding torch according to Claim 4, characterized in that the switching plate (14) has a collar (29) which projects through the housing (8) and to which the drive housing (18) is detachably secured.

6. Welding torch according to Claim 2, 4 or 5, characterized in that the housing (8) has two webs (9) spaced from one another for securing to the hand (6), which webs (9) surround parts (11) of the wire drive (3) with lateral spacing.

7. Welding torch according to Claim 1 or one of the subsequent claims, characterized in that the power connections (31) for the operating means of the welding torch (2) are arranged on a movable part of the cutout safety mechanism (5) or of the welding torch (2).

8. Welding torch according to Claim 1 or one of the subsequent claims, characterized in that an interface (36) for the connection of additional subassemblies is arranged on the wire drive (3).

9. Welding torch according to Claim 8, characterized in that there is arranged on the wire drive (3) a movable welding sensor (25), whereof the housing (33) having the sensor drive is secured at the interface (36) and whereof the rotatable sensor tube (34) surrounds the torch tube (10) and at the end bears a sensor element (35).

## Revendications

1. Chalumeau de soudage comportant un dispositif (3) d'entraînement du fil et un dispositif de sécurité de coupure (5), caractérisé par le fait que le dispositif de sécurité de coupure (5) est disposé en amont du dispositif (3) d'entraînement du fil, dans la direction (22) d'entraînement de ce dernier.

2. Chalumeau de soudage suivant la revendication 1, caractérisé par le fait que le dispositif (3) d'entraînement du fil et le tube (10) du chalumeau sont montés mobiles sur le dispositif de sécurité de coupure (5).

3. Chalumeau de soudage suivant la revendication 1 ou 2, caractérisé par le fait que le dispositif de sécurité de coupure (5) est relié à la main (6) d'un manipulateur (1).

4. Chalumeau de soudage suivant la revendication 2 ou 3, caractérisé par le fait que le dispositif de sécurité de coupure (5) possède un disque de commutation (14), qui est monté de manière à pouvoir pivoter dans le boîtier (8), comporte des contacts de commutation (15) et auquel sont fixés le dispositif (3) d'entraînement du fil et le tube (10) du chalumeau, le boîtier (8) étant monté sur la main (6).

5. Chalumeau de soudage suivant la revendication 4, caractérisé par le fait que le disque de commutation (14) possède un collet saillant (29) qui s'étend à l'intérieur du boîtier (8) et auquel est fixé de façon amovible le boîtier (18) du dispositif d'entraînement.

6. Chalumeau de soudage suivant la revendication 2, 4 ou 5, caractérisé par le fait que le boîtier (8) comporte deux barrettes (9) distantes l'une de l'autre, qui permettent la fixation sur la main (6), ces barrettes entourant des parties (11) du dispositif (3) d'entraînement du fil en étant distantes latéralement.

7. Chalumeau de soudage suivant la revendication 1 ou l'une des suivantes, caractérisé par le fait que les raccords (31) des conducteurs et conduits pour les moyens de fonctionnement du chalumeau de soudage (2) sont disposés sur une partie mobile du dispositif de sécurité de coupure (5) ou du chalumeau de soudage (2).

8. Chalumeau de soudage suivant la revendication 1 ou l'une des suivantes, caractérisé par le fait qu'une interface (36) prévue pour le raccordement d'unités supplémentaires est disposée sur le dispositif (3) d'entraînement du fil.

9. Chalumeau de soudage suivant la revendication 8, caractérisé par le fait que sur le dispositif (3) d'entraînement du fil est disposé un capteur mobile de soudage (25), dont le boîtier (33), muni du dispositif d'entraînement du capteur, est fixé sur l'interface (36) et dont le tube rotatif (34) entoure le tube (10) du chalumeau et porte un élément de détection (35) à son extrémité.

## FIG.1

# FIG.2

## FIG.3

<u>FIG. 4</u>